# EUROPEAN PATENT APPLICATION

(11) **EP 3 588 283 A1**
(43) Date of publication of application: **01.01.2020**
(21) Application number: 17897775.7
(22) Date of filing: 04.12.2017
(51) Int. Cl.: G06F 9/44

(54) **SYSTEM AND METHOD FOR RECOMMENDING SERVICE EXPERIENCE PACKAGE**

(30) Priority: 26.02.2017 CN 201710105706; 03.11.2017 CN 201711067839
(71) Applicant: Guangzhou Henghao Data Technology Co., Ltd., Guangzhou, Guangdong 510700 (CN)
(72) Inventor: HUANG, Youping, Guangzhou Guangdong 510700 (CN); ZHENG, Yu, Guangzhou Guangdong 510700 (CN)
(74) Representative: Kraus & Weisert Patentanwälte PartGmbB
(86) International application number: PCT/CN2017/114410
(87) International publication number: WO 2018/153140

(57) **Abstract**

A system(300) and method for recommending a business experience package. The method comprises: recommending the business experience package stored in the cloud intelligence base(102), related to an industry in which a user is engaged and not downloaded to the user to the user after the user logs into the system(300), and recommending, according to detected content edited by the user in the man-machine interaction interface(101), the business experience package with the business type matching the edited content to the user; and, recommend according to the user's historical information of interest and historical search information, the business experience package with the business type related to the historical information of interest and the historical search information to the user.

## Description

This application claims priority to Chinese patent application No. 201710105706.8, filed on February 26, 2017, which is incorporated herein by reference.

### TECHNICAL FIELD

This application relates to the field of machine intelligence technology, in particular to a system and method for recommending business experience packages.

### BACKGROUND

In all walks of life, experts' business experiences in dealing with specific business problems is a valuable wealth accumulated through long-term practice. Not only the experts in an industry can solve some business problems in the industry directly based on these business experiences, but also other professionals in the industry can learn from these business experiences to solve some business problems in the industry.

However, with the development of the times and the progress of technology, the business experience and business volume of all industries are explosively increasing. It takes a lot of time for people in the industry not only to find the appropriate business experience from a large number of business experience, but also to spend a lot of effort and time to learn, digest and improve these business experience in order to solve the corresponding business problems.

Obviously, the existing way of obtaining appropriate business experience manually is inefficient, which leads to the low efficiency of solving business problems and can not deal with a surge in business volume timely.

### SUMMARY

Embodiments of the present application provide a recommendation system and method for business experience packages, to improve efficiency for obtaining suitable business experience by a user.

In a first aspect, embodiments of the present application provide a recommendation system for a business experience package, comprising: a man-machine interaction interface, a cloud intelligence base and a recommendation module, wherein,the man-machine interaction interface is configured to receive an operation of the system from a user;the cloud intelligence base is configured to store and manage business experience packages with various business types, the business experience packages contain experience processes and experience solutions for dealing with business problems in corresponding business types; and the recommendation module is configured to recommend the business experience package stored in the cloud intelligence base, related to an industry in which an user is engaged and not downloaded to the user after the user logs into the system; recommend, according to detected content edited by the user in the man-machine interaction interface, the business experience package with the business type matching the edited content to the user; and, recommend according to an user's historical information of interest and historical search information, the business experience package with the business type related to the historical information of interest and the historical search information to the user.

In a second aspect, embodiments of the present application provide a business experience package recommendation method, applied by the system provided in the first aspect of the present application. The method comprises: recommending the business experience package stored in the cloud intelligence base related to the industry in which the user is engaged and not downloaded to the user after the user logs into the system; recommending according to detected content edited by the user in the man-machine interaction interface, the business experience package with the business type matching the edited content to the user; and recommending according to an user's historical information of interest and historical search information,the business experience package with the business type related to the historical information of interest and the historical search information to the user.

The above at least one solution adopted in the embodiments of the present application can achieve the following effects: suitable business experience packages stored in the cloud intelligence base can be recommended to the user automatically, to shorten the time of acquiring the business experience by the user and improve the efficiency of acquiring the business experience. Thus, the efficiency of solving business problems is improved and a surging business volume from various industries can be processed timely.

### DESCRIPTION OF THE DRAWINGS

The accompanying drawings described herein are used to provide a further understanding of this application and form a part of this application. The illustrative embodiments of this application and their explanations are used to interpret this application and do not constitute undue restrictions on this application. In the drawings:
Fig. 1 is a block diagram of a specific implementation of a system for recommending business experience package provided in the embodiments of the present application.
Fig. 2 is a flow chart of a specific implementation of recommending business experience packages to an user by a recommendation module in a system for recommending business experience package provided in the embodiments of this application .
Fig. 3 is a schematic diagram of a specific implementation of a recommendation module in a system for recommending business experience package provided in the embodiments of the present application.
Fig. 4 is a schematic diagram of an electronic device provided in the embodiments of the present application.

### DETAILED DESCRIPTION

In order to make the purpose, technical scheme and advantages of this application clearer, the technical scheme of this application will be described clearly and completely in the light of the specific embodiments of this application and the corresponding drawings. Obviously, the embodiments described are only parts of the embodiments of this application, not all of them. Based on the embodiments in the present application, all other embodiments acquired by those of ordinary skill in the art without creative work fall within the protection scope of the present application.

In order to solve the existing technical problems, the embodiments of this application provide a system and method of recommending business experience package. The technical solutions provided by the embodiments of this application are described in detail below in conjunction with the drawings.

First, it should be noted that the system for recommending business experience package described in the embodiment of this application may also be referred to as an expert system or an expert system experience sharing platform.

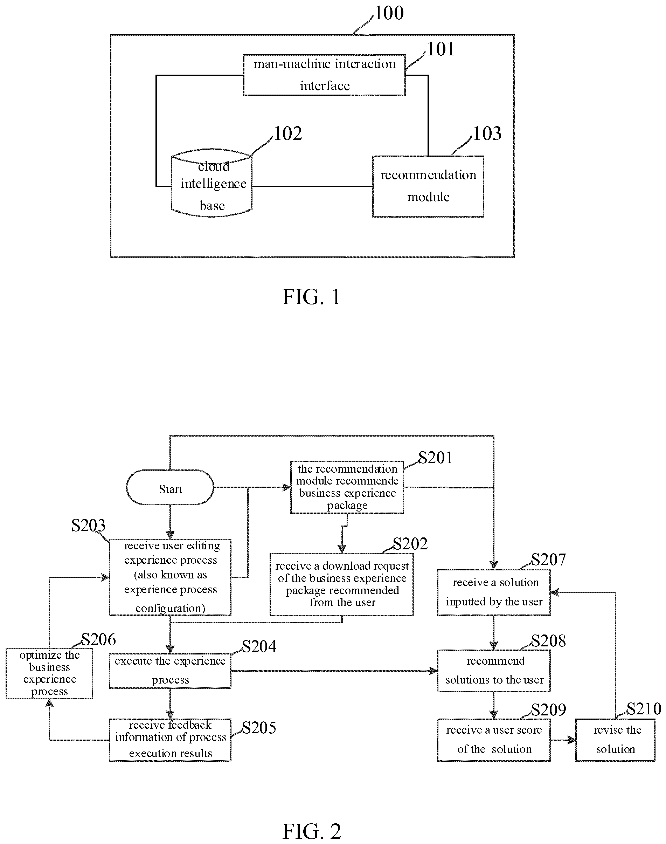

As shown in Fig. 1, a system for recommending business experience package provided by the embodiment of this application may include: man-machine interaction interface 101, cloud intelligence base 102 and recommendation module 103.

The man-machine interaction interface 101 is used to receive an user's operation to the recommendation system, and can also be used to display the recommendation results to the user.

Specifically, the man-machine interaction interface 101 can be the interface of the recommendation system or a part of the interface of the recommendation system, and the man-machine interaction interface 101 can be a visual interface. The user can achieve man-machine interaction by clicking, dragging, rolling and sliding operations on the man-machine interaction interface 101. In the specific implementation process, the user can perform these operations through a mouse, or through a touch.

Through this man-machine interaction interface 101, the user can not only load, edit and modify local expert experience to form a new business experience package, but also upload the new business experience package to the cloud intelligence base 102 to realize the sharing of business experience package. Moreover, in this process, the user do not need to write program code, which is simple and feasible.

Cloud intelligence base 102 is used to store and manage business experience packages of various business types. The business experience packages contain experience processes and experience solutions for dealing with business problems in corresponding business types.

Specifically, business experience packages can be data packages formed by the experience processes and the experience solutions made by industry experts in different industries to locate and solve business problems in different business types in the industry; where, the experience process can be understood as a way of thinking for industry experts to deal with business problems in corresponding business types, and the solution can be understood as a method for the industry experts to deal with business problems in corresponding business types. For example, the experience process can be an analysis process and a decision process, and the solution can be an algorithm, a log parsing scheme,an image recognition scheme, an instruction set and so on.

Preferably, in order to quickly recommend business experience packages to the user, business experience packages in cloud intelligence base 102 are generally stored according to industry type and business type.

In practical applications, business experience packages can be stored either in cloud intelligence base 102 or locally on the device where the system for recommending business experience package is located, which is reasonable. Where, cloud intelligence base 102 can be understood as a cloud database. Of course, when business experience packages are stored in cloud intelligence base 102, business experience can be shared among different recommendation systems.

For example, since cloud intelligence base 102 can support the user to search and download business experience packages through the recommendation system provided in the embodiments of this application, reuse of business experience packages can be realized.

recommendation module 103 is configured to recommend the business experience package stored in the cloud intelligence base, related to an industry in which an user is engaged, and not downloaded to the user after the user logs into the system; recommend, according to detected content edited by the user in the man-machine interaction interface, the business experience package with the business type matching the edited content to the user; and, recommend according to an user's historical information of interest and historical search information, the business experience package with the business type related to the historical information of interest and the historical search information to the user.

In a more detailed implementation, the recommendation module 103 can be specifically configured to, recommend the business experience package with the business type matching the edited content to the user according to a keyword in the detected content edited by the user in the man-machine interaction interface.

Because business experience packages stored in cloud intelligence bases are generally classified according to industry type and business type, the keyword mentioned above can be industry type, business type, etc.

In practice, the user of the service package recommendation system provided by the embodiment of this application will generally belong to a specific industry, such as the mobile network fault maintenance user belongs to the communication industry. If the content edited by the mobile network fault maintenance user is "core network fault handling", the corresponding industry type is communication, and the corresponding service type is core network maintenance. That is to say, the corresponding keywords are communication and core network maintenance. Then, the business experience packages matching with these two keywords and stored in cloud intelligence base 102 are recommended to the user.

In another more detailed embodiment, user's historical information of interest may include industry types and business types for business experience packages that have been clicked or downloaded.

The system for recommending business experience package provided by the embodiment of this application can automatically recommend suitable business experience packages stored in cloud intelligence bases to the user, shorten the time for the user to acquire business experience, improve the efficiency of the user to acquire business experience, thereby improving the efficiency of solving business problems, and dealing with a sudden increase of business volume in various industries in a timely manner.

Optionally, the system for recommending business experience package provided in the embodiment of this application can also include an execution module, which can load and execute the experience process and business solution in the business experience package, or process decision results of the system for recommending business experience package (such as instruction operation, alarm output, etc.) to solve the corresponding business problems. Specifically, the execution module can receive and execute the user's experience process and business solution in the business experience package configured into the recommendation system through the man-machine interaction interface 101. The business experience package can be either a business experience package edited locally by the user or a business experience package recommended to the user by the above recommendation module 103.

Generally speaking, the system for recommending business experience package provided in the embodiment of this application can automatically perform a series of calculations and operations through the above-mentioned execution module to solve the corresponding business problems. These calculations and operations can replace thinking activities and operations of human experts in solving business problems. Where, the thinking activities include but are not limited to comparison, judgment, logical reasoning, etc. Operations include but are not limited to executing system instructions, collecting data (through receiving instructions or sensors), sending alarms, repairing faults through system instruction(such as rebooting board cards), emptying cache, recommending processing schemes, etc.

Optionally, the system for recommending business experience package provided in the embodiment of this application may also include a learning module configured for learning and modeling existing business experience packages and obtaining new business experience packages. Specifically, the learning module can not only learn and store local business experience packages (local experts' experience), but also learn based on the business experience packages in cloud intelligence base 102 recommended by recommendation module 103, so as to find better ways to solve business problems and intelligently handle various business problems by combining different experts' thinking modes.

Understandably, the difference between experienced experts and inexperienced novices is obvious in all walks of life, whether in terms of efficiency or effectiveness. Machines can also learn and absorb existing business experience to obtain new system for recommending business experience package. Its execution module will solve the corresponding business problems more efficiently and effectively.

In a more specific implementation, the man-machine interaction interface 101 may include one or more of a process configuration management module, a dynamic trajectory tracking module, a feedback module and a business experience package auditing module.

the process configuration module is configured to receive an operation of an interface element in the man-machine interaction interface from the user, control and manage a flow chart element in a business process flow chart, and receive an edit configuration of a task node in the business process flow chart by the user.

Where, the interface elements include components displayed in the man-machine interaction interface, which can be process components in particular; the flow chart elements are business processing steps or business data represented by flow chart symbols in the business process flow chart; and the task nodes are flow chart elements in the business process flow chart adapted to configure business solution by the user. Business process flow chart can be either a business process flow chart edited locally by the user in the business package recommendation system or a business process flow chart corresponding to experience process in the business experience package recommended by the recommendation module to the user.

It is not difficult to imagine that when editing the configuration process through the process configuration module, the user is not required to write program code, which is simple and feasible.

The dynamic trajectory tracking module is used to show the execution process of business processing flow in the way of dynamic trajectory diagram. This enables the user to understand an execution progress of business processing flow .

Optionally, the log information corresponding to the task node in the dynamic trajectory graph displayed by the dynamic trajectory tracking module can also be viewed by the user through the viewing operation of the task node, so as to facilitate the user to know the tasks in the current node.

The feedback module is used to receive a feedback information from the user on the business experience package recommended by the recommendation module, so that the user can evaluate and feedback the business experience package recommended by the recommendation module 103 according to the actual use effect, and improve the user experience.

These feedback information can include: the results of experience process execution, user's scoring information, evaluation content and suggestion content according to the actual use effect of business experience package, and so on. Where, the scoring information, evaluation content and suggestion content can be either for the experience process in the business experience package, or for the solution in the business experience package.

The business experience package auditing module is used to audit a local business experience package, activate the local business experience package, and upload the local business experience package to the cloud intelligence base. Uploading and storing locally formed new local business experience packages to cloud intelligence base 102 can complete the updating and sharing of new business experience.

On the basis of the feedback module included in the man-machine interaction interface 101 of the system for recommending business experience package provided by the application embodiment, the system for recommending business experience package provided by the application embodiment may also include a notification module configured for sending a notification which indicates update of a recommendation strategy of the business experience package according to the received feedback information to the recommendation module when the feedback module receives the feedback information, so that the recommendation module 103 can recommend a better business experience package to the user again.

At this time, the recommendation module 103 is configured to: recommend the business experience package with the business type matching the edited content to the user according to the content edited by the user in the man-machine interaction interface and a scoring information and/or an evaluation content in the feedback information; alternatively, the recommendation module 103 is specifically configured to: recommend the business experience package with the business type related to the historical information of interest and the historical search information to the user based on the user's historical information of interest, the historical search information and the scoring information and/or the evaluation content in the feedback information.

Optionally, the recommendation module 103 can be further configured to recommend the business experience package to the user based on the content of the experience process configured in the business experience package in the system and/or the execution result of the experience process configured in the business experience package in the system.

It is not difficult to understand that, when the recommendation module 103 recommends business experience packages to the user, the more factors are taken into account, the recommendation results are more in line with the user's expectation, and more helpful to improve the efficiency of solving business problems.

The business experience package auditing module mentioned above can include an acquisition unit, an audit unit and an upload unit. Where, the acquisition unit is used to acquire the local business experience package generated by modification by the user to the recommended business experience package according to his own experience and related knowledge; the audit unit is used to audit the local business experience package; and the upload unit is used to upload the local business experience package approved by the audit unit to the cloud intelligence base.

As mentioned above, uploading local business experience packages to cloud intelligence bases can realize the sharing of business experience packages among different system for recommending business experience packages and the reuse of local business experience packages.

On the basis of any of the above embodiments, the system for recommending business experience package provided by the application embodiments may also include a search module and a download module.

The search module is used to search the business experience package from the cloud intelligence base, and the download module is used to download the business experience package from the cloud intelligence base to the local area.

In practical application, the search module and the download module can also be a module of the man-machine interaction interface 101 mentioned above. It is convenient for the user to search and download business experience packages stored in cloud intelligence base 102.

In order to better understand the process of recommending a business experience package by the system for recommending business experience package provided in the present application embodiment, a more detailed embodiment is used to illustrate in the following.

As shown in Fig. 2, the process of recommending a business experience package by the recommendation module in a system for recommending business experience package provided in the embodiment of the present application to a user may include the following steps:
Start by executing steps 201, S203 or S207;
S201, the recommendation module recommende business experience package, and then turn to steps S202 or S207;
The specific content executed by step S201 can be as follows: after the user logs into the system for recommending business experience package, the business experience package stored in the cloud intelligence base, related to the industry in which the user is engaged, and has not been downloaded, is recommended to the user for learning or reference of the local system for recommending business experience package, so that the local system for recommending business experience package, through combining with other experts' way of thinking in the business experience package recommended by the recommendation module, can find better ways and ideas to solve the corresponding business problems, so as to optimize the experience process in the local system for recommending business experience package, and automatically execute the optimized experience process to deal with the corresponding business problems.

Alternatively, the specific content executed by the step S201 may be as follows: detect the content edited by the user in the man-machine interaction interface, trigger a search for the same type of business experience packages stored in the cloud intelligence base based on the detected content, so as to recommend the business experience packages matching with the edited content to the user, and display them on the man-machine interaction interface for learning or reference of the local system for recommending business experience package; the local system for recommending business experience package through combining with other experts' way of thinking in the business experience package recommended by the recommendation module, can find better ways and ideas to solve the corresponding business problems, so as to optimize the experience process in the local system for recommending business experience package, and automatically execute the optimized experience process to deal with the corresponding business problems.

S202, receive a download request of the business experience package recommended by the recommendation module from the user, and then turn to step S204;
The specific content executed by the step S202 may be as follows: receive the download request of the business experience package recommended by the recommendation module from the user, download the business experience package recommended by the recommendation module to the local area, receive the modification of the business experience package recommended by the recommendation module to form a new business experience package based on the user's own business experience and relevant knowledge, and receive an operation of configuring the business experience package into the system for recommending business experience package,executed by the user, and then turn to step S204.

S203, receive user editing experience process (also known as experience process configuration), and receive an operation of configuring by the user the editing experience process into the system for recommending business experience package; and then turn to step S201 or S204.

S204, execute the experience process, and then turn to step S205 or step S208;

The experience process can be either the experience flow configured in the system for recommending business experience package at step S202 or the experience flow configured in the system for recommending business experience package at step S203.

S205, receive feedback information of process execution results, and then turn to step S206;

The feedback information of process execution results can be the processing results of corresponding business problems. For example, if the corresponding business problems are the core network troubleshooting, the corresponding business problem processing results can be the processing success or failure, or the specific type of troubleshooting.

S206, optimize the business experience process, and then return to step S203.

The specific content executed by the step S206 can be to optimize the business experience process according to the feedback information of the received process execution results.

S207, receive a solution inputted by the user, and then execute step S208;

The specific content executed by step S207 may be as follows: receive a local solution inputted by the user in the man-machine interaction interface.

S208, recommend solutions to the user, and then execute step S209;

The specific content executed by step S208 may be as follows: the recommendation module recommends,according to the keywords in the solution inputted by the user, solutions in business experience packages stored in cloud intelligence bases that match the keywords .

S209, receive a score of the solution, which specifically includes: receiving a score of the solution recommended by the recommendation module to the user, and then execute the step S210;

Of course, at step S209, it can also receive user's comments and suggestions for improvement of the solutions recommended by the recommendation module, so as to facilitate the recommendation module to recommend better business experience packages to the user.

S210, revise the solution, which specifically include: revising according to the received user's score on the solution, the solution to obtain a new solution, and then return to step S207.

In addition, in the process of executing the experience process, the recommendation module can recommend better business experience packages to the user through specific algorithms (e.g., collaborative filtering algorithm, etc.) based on the content and/or results of the experience process; or, the system for recommending business experience package provided in the embodiment of this application can also adjust and optimize the recommendation strategy used by the recommendation module according to the feedback information received by the feedback module; or, enable the recommendation module to relearn, analyze the new experience packages, the scoring information, evaluation content and suggestion content in the feedback information, so as to form a better recommendation scheme and strategy of the experience package.

It is not difficult to see from figure 2 that the closed loop formed by the above step S201-S210 can continuously optimize the experience flow and modify the solution, so that the recommendation module can continuously analyze the new business experience package and feedback information to form better recommendation scheme and strategy of the experience package, recommend more appropriate business experience package to the user, and improve the efficiency of the user to obtain the expected business experience package. Finally, the efficiency of dealing with related business issues is improved , which can meet the growing business needs.

It should also be noted that the scope of application of a system for recommending business experience package (also known as an expert system as described above) provided by the embodiment of this application includes, but is not limited to, the scope involved in the above embodiments. For example, besides intelligent maintenance of communication network, other fields such as intelligent transportation, intelligent medical treatment are also applied.

For example, using a system for recommending business experience package provided in the embodiment of this application can help network maintainers find suspicious points of equipment failure and replace maintenance experts to conduct operations, such as quickly restart, reverse, isolate, modify data and so on. Because the execution speed and performance of the machine is much higher than that of human beings, the application of the system for recommending business experience package can greatly reduce the time-consuming of fault location (business problems) and improve the efficiency of fault location. Moreover, since the system for recommending business experience package can also continuously learn business experience, the application of the system for recommending business experience package can also effectively improve the accuracy of fault location and the speed of business recovery. Network maintainers can obtain the target business experience package (such as the experience process and solution described above) by searching or recommendation of the system for recommending business experience package.

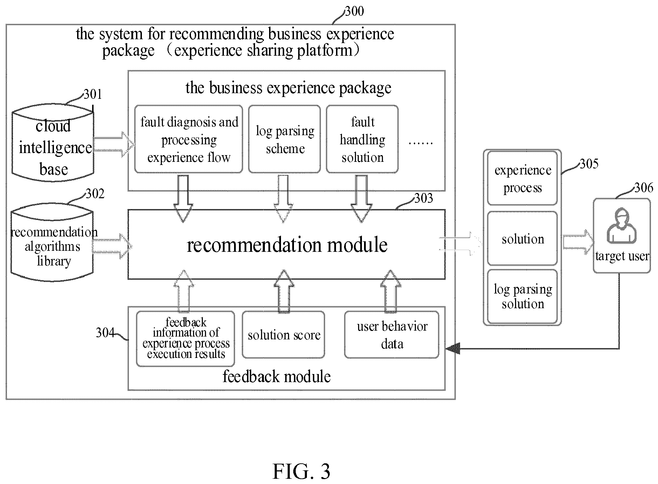

Referring to Fig. 3 below, a system for recommending business experience package provided by embodiments of the application and a specific structure of its recommendation module in practical application are illustrated schematically. The system for recommending business experience package shown in Figure 3 can be a structure schematic diagram of a communication network expert system.

As shown in Figure 3, the system for recommending business experience package 300 can include: a cloud intelligence base 301, a recommendation algorithms library 302, a recommendation module 303 and a feedback module 304. Where, the recommendation module 303 can obtain the business experience package stored in the cloud intelligence base 301, and the business experience package can include business experience, such as fault diagnosis and processing experience flow, log parsing scheme, fault handling solution, etc. At the same time, the recommendation module 303 can also get the user's feedback information from the feedback module 304, which can include feedback information of experience process execution results, solution score, user behavior data (user's historical information of interest, historical search habits, etc.) as examples; then the recommendation module 303 can use specific recommendation algorithms (such as collaborative filtering algorithm) stored in the recommendation algorithm library 302. and feedback information to recommend appropriate business experience package 305 to target user 306. The recommended business experience package 305 can include experience process, solution and log parsing solution, etc.

Responsive to a system for recommending business experience package provided in the embodiment of this application, based on the same invention concept, the embodiment of this application also provides a method for recommending business experience , which is briefly described below.

The method for recommending business experience provided in the embodiment of this application may include:
recommending the business experience package stored in the cloud intelligence base, related to the industry in which the user is engaged and not downloaded to the user after the user logs into the system;
recommending according to detected content edited by the user in the man-machine interaction interface, the business experience package with the business type matching the edited content to the user ; and
recommending according to an user's historical information of interest and historical search information,the business experience package with the business type related to the historical information of interest and the historical search information to the user.

Specifically, the business experience packages of the business type matching the edited content can be recommended to the user based on the detected keywords of the content edited by the user in the man-machine interaction interface.

A system for recommending business experience package provided by the embodiment of this application can automatically recommend suitable business experience packages stored in cloud intelligence bases to the user, shorten the time for the user to acquire business experience, improve the efficiency of the user to acquire business experience, thereby improving the efficiency of solving business problems, and dealing with a sudden increase of business volume in various industries in a timely manner.

Optionally, the method for recommending business experience provided by the embodiment of this application may also include: receiving feedback from the user on the recommended business experience packages; such feedback information may include: experience process execution results, scoring information , evaluation content and suggestion content on the business experience packages made by the user according to the actual use effect of the business experience packages, etc. Wherein, the scoring information, the evaluation content and the suggestion content can be either for the experience process in the business experience package, or for the solution in the business experience package.

On this basis, the method for recommending business experience provided by the embodiment of this application may include: recommend the business experience package with the business type matching the edited content to the user according to the content edited by the user in the man-machine interaction interface and the scoring information and/or the evaluation content in the feedback information; and recommend the business experience package with the business type related to the historical information of interest and the historical search information to the user based on the user's historical information of interest, the historical search information and the scoring information and/or the evaluation content in the feedback information.

Further, the method for recommending business experience provided in the embodiment of the present application may further include: send a notification which indicates update of a recommendation strategy of the business experience package according to the received feedback information, to the recommendation module when the feedback information is received, so that the recommendation module can recommend a better business experience package to the user again.

It is not difficult to understand that, the more factors are taken into consideration when the business experience packages are recommended to the user, the recommendation results are more in line with the user's expectations, and it is more conducive to improve the efficiency of solving business problems.

It should be noted that, since the method for recommending business experience package provided in the present application embodiment corresponds to the system for recommending business experience package provided in the present application embodiment, the description of the method for recommending business experience package in this specification is relatively simple. For the relevant content, please refer to the introduction of the system for recommending business experience package in the preceding section.

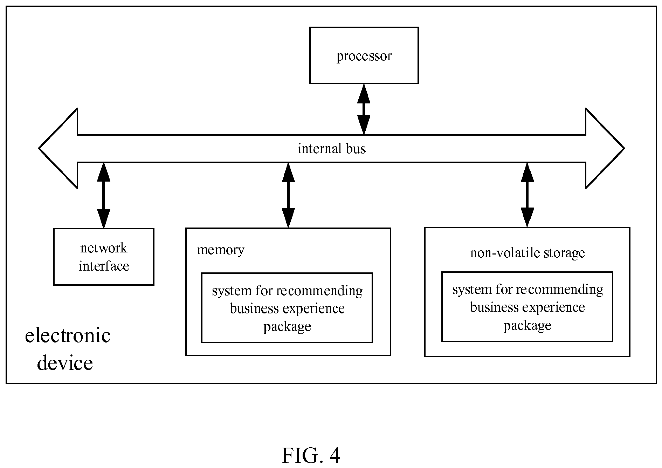

Fig. 4 shows a schematic diagram for a structure of an electronic device provided in the embodiment of this application. Referring to figure 4, the electronic device includes at the hardware level,a processor, optionally an internal bus, a network interface, and a storage. Where, the storage may include a memory, such as Random-Access Memory (RAM), or non-volatile memory, such as at least one disk memory. Of course. The electronic device may also include hardware needed for other businesses.

The Processor, the network interface and the memory can be interconnected by the internal bus, which can be ISA (Industry Standard Architecture) bus, PCI (Peripheral Component Interconnection) bus or EISA (Extended Industry Standard Architecture, Extended Industry Standard Architecture) bus. The bus can be divided into address bus, data bus, control bus, etc. For ease of presentation, figure 4 is represented by only one bidirectional arrow, but it does not mean that there is only one bus or one type of bus.

The storage is configured for storing programs. Specifically, the program may include program code, which includes computer operation instructions. The storage can include the memory and non-volatile memory, and provide instructions and data to the processor.

The processor reads the corresponding computer program from the non-volatile memory and runs in memory, to form a network coverage performance characterization device at the logical level. The processor executes the program stored in the storage and is specifically configured to perform the following operations:
recommending the business experience package stored in the cloud intelligence base, related to the industry in which the user is engaged and not downloaded to the user after the user logs into the system;
recommending according to detected content edited by the user in the man-machine interaction interface, the business experience package with the business type matching the edited content to the user ; and
recommending according to an user's historical information of interest and historical search information,the business experience package with the business type related to the historical information of interest and the historical search information to the user.

The method executed by the system for recommending business experience package as disclosed in the embodiment shown in Fig. 4 of this application can be applied to or implemented by a processor. The processor may be an integrated circuit chip with signal processing capability. In the implementation process, each step of the above method can be accomplished by the integrated logic circuit of the hardware in the processor or instructions in the form of software. These processor can be a general purpose processor,including central processing unit (CPU), network processors (NP), etc. It can also be a digital signal processors (DSP), an application specific integrated circuit (ASIC), a field-programmable gate array (Field-Programmable Gate Array, FPGA) or other programmable logic device, discrete gate or transistor logic device, discrete hardware components. The methods, steps and logical block diagrams disclosed in the embodiments of the present application can be implemented or executed. The general purpose processor can be a microprocessor or any conventional processor. The steps of the method disclosed in connection with the embodiment of the present application may be directly embodied in the execution of a hardware decoding processor or in the combination of hardware and software modules in the decoding processor. Software modules can be located in RAM, flash memory, read-only memory, programmable read-only memory or electrical erasable programmable memory, registers and other mature storage media in the field. The storage medium is located in the storage. The processor reads the information in the storage and completes the steps of the above method with its hardware.

The embodiment of this application also proposes a computer-readable storage medium that stores one or more programs, including instructions that, when executed by an electronic device comprising multiple applications, enable the electronic device to execute the method of executed by the system for recommending business experience package in the embodiment shown in Fig. 4. The electronic device is specifically configured for executing the following steps of:
recommending the business experience package stored in the cloud intelligence base, related to the industry in which the user is engaged and not downloaded to the user after the user logs into the system;
recommending according to detected content edited by the user in the man-machine interaction interface, the business experience package with the business type matching the edited content to the user ; and
recommending according to an user's historical information of interest and historical search information,the business experience package with the business type related to the historical information of interest and the historical search information to the user

Those skilled in the art should understand that embodiments of this application may be provided as methods, systems, or computer program products. Therefore, the present application may take the form of full hardware embodiments, full software embodiments, or embodiments in combination with software and hardware aspects. Furthermore, the application may take the form of a computer program product implemented on one or more computer available storage media (including, but not limited to, disk memory, CD-ROM, optical memory, etc.) containing computer available program code.

The present application is described with reference to a method, device (system), and flow chart and/or block diagram of a computer program product according to embodiments of the present application. It should be understood that each flow and/or block in a flowchart and/or block diagram, and the combination of the flow and/or block in a flowchart and/or block diagram, can be implemented by computer program instructions. These computer program instructions can be provided to processors of general purpose computers, special purpose computers, embedded processors or other programmable data processing devices to generate a machine, such that instructions executed by processors of computers or other programmable data processing devices generate a device for achieving functions specified in one or more processes in a flowchart, and/or one or more box in a block diagram.

These computer program instructions may also be stored in a computer-readable storage that may guide a computer or other programmable data processing device to work in a specific way, so that instructions stored in the computer-readable storage produce manufactures including instruction devices, which can achieve functions specified in one or more processes in a flowchart, and/or one or more box in a block diagram.

These computer program instructions can also be loaded on a computer or other programmable data processing device, such that a series of operational steps are performed on a computer or other programmable device to generate computer-implemented processing, thereby providing instructions to be executed on a computer or other programmable device for implementing functions specified in one or more processes in a flowchart, and/or one or more box in a block diagram.

It should be noted that each of the embodiments in this application is described in a related manner, and that the same and similar parts of each embodiment can be referred to each other. Each embodiment focuses on the differences from other embodiments. In particular, for device embodiments, since they are basically similar to method embodiments, the description is relatively simple, and the relevant points can be referred to in part of the description of method embodiments.

It should also be noted that the term "include", "comprise" or any other variation thereof is intended to cover non-exclusive inclusions, so that a process, method, commodity or equipment that includes a series of elements includes not only those elements, but also other elements that are not explicitly listed, or elements inherent in such processes, methods, commodities or equipment. In the absence of further restrictions, the elements limited by the statement "includes one..." do not exclude the existence of other identical elements in processes, methods, commodities or equipment that include elements.

The above are only embodiments of this application and are not used to restrict this application. For those skilled in the art, the application may vary in various ways. Any modification, equivalent replacement, improvement, etc. made within the spirit and principles of this application shall be included in the scope of the claims of this application.

## Claims

1. A system for recommending a business experience package, comprising: a man-machine interaction interface, a cloud intelligence base and a recommendation module;wherein,
the man-machine interaction interface is configured to receive an operation of the system from a user;
the cloud intelligence base is configured to store and manage business experience packages with various business types, the business experience packages contain experience processes and experience solutions for dealing with business problems in corresponding business types; and
the recommendation module is configured to recommend the business experience package stored in the cloud intelligence base, related to an industry in which an user is engaged and not downloaded to the user after the user logs into the system; recommend, according to detected content edited by the user in the man-machine interaction interface, the business experience package with the business type matching the edited content to the user; and, recommend according to an user's historical information of interest and historical search information, the business experience package with the business type related to the historical information of interest and the historical search information to the user.

2. The system according to claim 1, **characterized in that**, the recommendation module is specifically configured to, recommend the business experience package with the business type matching the edited content to the user according to a keyword in the detected content edited by the user in the man-machine interaction interface.

3. The system according to claim 1, **characterized in that**, the man-machine interaction interface comprises one or more of a process configuration management module, a dynamic trajectory tracking module, a feedback module and a business experience package auditing module;
the process configuration module is configured to receive an operation of an interface element in the man-machine interaction interface from the user, control and manage a flow chart element in a business process flow chart, and receive an edit configuration of a task node in the business process flow chart by the user; wherein, the interface element comprises a component displayed in the man-machine interaction interface; the task node is the flow chart element of the business process flow chart adapted to configure business solution by the user;
the dynamic trajectory tracking module is configured to display an execution process of business processing flow in the way of dynamic trajectory diagram;
the feedback module is configured to receive a feedback information from the user on the business experience package recommended by the recommendation module; and
the business experience package auditing module is configured to audit a local business experience package, activate the local business experience package, and upload the local business experience package to the cloud intelligence base.

4. The system according to claim 3, **characterized in that**, a log information corresponding to the task node in the dynamic trajectory diagram displayed by the dynamic trajectory tracking module is viewable by the user through a viewing operation of the task node.

5. The system according to claim 3, **characterized in that**, the business experience package auditing module comprises: an acquisition unit, an audit unit and an upload unit;
the acquisition unit is configured to acquire the local business experience package generated by modification by the user to the recommended business experience package according to his own experience and relevant knowledge;
the audit unit is configured to audit the local business experience package; and
the upload unit is configured to upload the local business experience package approved by the audit unit to the cloud intelligence base.

6. The system according to claim 3, **characterized in that**, the system further comprises a notification module,
the notification module is configured to send a notification which indicates update of a recommendation strategy of the business experience package according to the received feedback information, to the recommendation module when the feedback module receives the feedback information, so that the recommendation module recommends a better business experience package to the user again.

7. The system according to claim 6, **characterized in that**,
the recommendation module is specifically configured to: recommend the business experience package with the business type matching the edited content to the user according to the content edited by the user in the man-machine interaction interface and a scoring information and/or an evaluation content in the feedback information; alternatively,
the recommendation module is specifically configured to: recommend the business experience package with the business type related to the historical information of interest and the historical search information to the user based on the user's historical information of interest, the historical search information and the scoring information and/or the evaluation content in the feedback information.

8. The system according to any of claims 1 to 7, **characterized in that**, the recommendation module is further configured to recommend the business experience package to the user based on the content of the experience process configured in the business experience package in the system and/or the execution result of the experience process configured in the business experience package in the system.

9. The system according to any of claims 1 to 7, **characterized in that**, the system further comprises a search module and a download module,
the search module is configured to search the business experience package from the cloud intelligence base;
the download module is configured to download the business experience package from the cloud intelligence base to the local area.

10. A business experience package recommendation method, applied by the system according to any of claims 1 to 9, **characterized in that**, the method comprises:
recommending the business experience package stored in the cloud intelligence base, related to the industry in which the user is engaged and not downloaded to the user after the user logs into the system;
recommending according to detected content edited by the user in the man-machine interaction interface, the business experience package with the business type matching the edited content to the user ; and
recommending according to an user's historical information of interest and historical search information,the business experience package with the business type related to the historical information of interest and the historical search information to the user.
